# EUROPÄISCHE PATENTSCHRIFT

(11) **EP 1 674 318 B1**
(45) Veröffentlichungstag und Bekanntmachung des Hinweises auf die Patenterteilung: **04.07.2007**
(21) Anmeldenummer: 05027563.5
(22) Anmeldetag: 16.12.2005
(51) Int. Cl.: B60K 15/035

(54) **Kraftstoffbehälter mit einem Entlüftungssystem umfassend ein Entlüftungsventil**
Fuel tank with a venting system having a venting valve
Réservoir de carburant avec dispositif d'aération du réservoir ayant une soupape de purge

(30) Priorität: 22.12.2004 DE 102004063008
(43) Veröffentlichungstag der Anmeldung: 28.06.2006
(73) Patentinhaber: Kautex Textron GmbH & Co. KG., 53229 Bonn (DE)
(72) Erfinder: Buse, Werner, 41564 Kaarst (DE); Treudt, Volker, 51570 Windeck (DE)
(74) Vertreter: Kierdorf, Theodor

(56) Entgegenhaltungen:
- WO-A-20/04089673
- US-A1- 2004 173 190
- US-B1- 6 390 073
- PATENT ABSTRACTS OF JAPAN Bd. 1997, Nr. 01, 31. Januar 1997 (1997-01-31) -& JP 08 246966 A (MITSUBISHI MOTORS CORP), 24. September 1996 (1996-09-24)
- PATENT ABSTRACTS OF JAPAN Bd. 1995, Nr. 09, 31. Oktober 1995 (1995-10-31) & JP 07 151018 A (AISAN IND CO LTD), 13. Juni 1995 (1995-06-13)
- PATENT ABSTRACTS OF JAPAN Bd. 1997, Nr. 04, 30. April 1997 (1997-04-30) -& JP 08 319905 A (HONDA MOTOR CO LTD), 3. Dezember 1996 (1996-12-03)

## Beschreibung

Üblicherweise sind Kraftstoffbehälter von Kraftfahrzeugen mit Ventilen zur Betriebs- und Betankungsentlüftung versehen. Während des Betriebs des Kfz geht der flüssige Kraftstoff aufgrund von Temperatureinwirkungen und Schwallbewegungen teilweise vom flüssigen in den gasförmigen Zustand über. Darüber hinaus dehnt sich Kraftstoff aufgrund von Temperatureinwirkung aus. Schließlich wird auch während des Betriebs des Kfz Kraftstoff aus dem Kraftstoffbehälter entnommen, so dass der Kraftstoffbehälter üblicherweise zumindest bei bestimmten Drücken, die in diesem vorherrschen können, nicht hermetisch gegenüber der Atmosphäre verschlossen ist. Auch bei der Betankung des Kfz ist der Kraftstoffbehälter naturgemäß geöffnet. Dann ist es erforderlich, das von dem einströmenden Kraftstoffvolumenstrom aus dem Volumen des Behälters verdrängte Gas in geeigneter Art und Weise abzuführen. Je nach Betankungsvolumenstrom können Gasmengen von bis zu 60 l/min anfallen. Es ist selbstverständlich, dass die aus dem Behältervolumen verdrängten kohlenwasserstoffbeladenen Gase nicht ungefiltert an die Atmosphäre abgegeben werden. Hierzu ist es bekannt, die bei der Betankung anfallende Gasmenge entweder über ein Kraftstoffdampffilter an die Atmosphäre abzugeben (amerikanisches System) oder über eine spezielle Einrichtung an der Zapfpistole abzusaugen (u. A. europäisches System).

Abgesehen von den zuvor geschilderten Betriebszuständen, bei denen der Kraftstoffbehälter direkt oder indirekt mit der Atmosphäre kommunizieren muss, ist es für die sogenannte "OBD-Prüfung" (on board diagnostics) zumindest kurzzeitig erforderlich, den Kraftstoffbehälter hermetisch abzuriegeln. Bei der sogenannten "OBD-Prüfung" wird der Kraftstoffbehälter hermetisch verriegelt und zwecks Dichtigkeitsprüfung unter Überdruck oder Unterdruck (bezogen auf den Atmosphärendruck) gesetzt. Bei einem unzulässigen Druckabfall registriert die Bordelektronik des Kfz eine Undichtigkeit.

Schließlich wäre noch die Reinigung des Kraftstoffdampffilters als Betriebszustand zu erwähnen, der schaltungs- und steuerungstechnisch berücksichtigt sein muss. Bei der Reinigung des Kraftstoffdampffilters wird von der Brennkraftmaschine des Kfz Verbrennungsluft über das Kraftstoffdampffilter aus der Atmosphäre angesaugt.

Für alle vorgenannten Betriebszustände des Kfz muss an dem Kraftstoffbehälter die entsprechende Ventil- und Steuerungstechnik vorgesehen sein. Zum Steuern vorstehend geschilderter Betriebszustände ist es bekannt, Belüftungsventile, Entlüftungsventile, Diagnoseventile und sogenannte "Purge"-Ventile sowie eine entsprechende Steuerung dieser Ventile zur Verwirklichung der Betriebszustände bereitzustellen. Bekannte Entlüftungssysteme sind dabei entweder für die Dichtigkeitsprüfung mittels Unterdruck oder für die Dichtigkeitsprüfung mittels Überdruck ausgelegt. Es sind jeweils für verschiedene Betriebszustände verschiedene Ventile vorgesehen, die voneinander beabstandet angeordnet sind und mit Leitungen verbunden sind. Solche Systeme sind unflexibel, da je nach Fahrzeugtyp und Bordelektronik entweder eine Dichtigkeitsdiagnose mittels Überdruck oder Unterdruck gewünscht ist. Darüber hinaus sind Leitungen zwischen Ventilen und Filtern potentielle Emissionsquellen für gasförmige Kohlenwasserstoffe, die ebenfalls nicht wünschenswert sind.

Aus der US 2004/0173190 ist ein Kraftstoffbehälter mit einem Entlüftungssystem bekannt, das zwei in Serie geschaltete Kraftstoffdampffilter umfasst. Zwischen den Kraftstoffdampffiltern ist ein Ventil vorgesehen, welches an beide Kraftstoffdampffilter sowie an die Atmosphäre angeschlossen ist. Über den Atmosphärenanschluss ist eine Rückspülung beider Kraftstoffdampffilter zur gleichen Zeit über separate Rückspülleitungen zum Motor möglich, wobei das zwischen den Kraftstofffiltern angeordnete Ventil die Verbindung zwischen den Kraftstoffdampffiltern verschließt.

Die US2004/0173190 offenbart damit einen Kraftstoffbehälter für Kfz mit einem Entlüftungssystem umfassend ein erstes und zweites Kraftstoffdampffilter und ein Entlüftungsventil, mit einem Ventilgehäuse mit einem schaltbaren Element zur Realisierung zweier Schaltstellungen und mit drei Anschlüssen, wobei ein erster Anschluss an das dem Kraftstoffbehälter nachgeschaltete erste Kraftstoffdampffilter, und zwei weitere Anschlüsse an die Atmosphäre vorgesehen sind, wobei das Ventilgehäuse eine erste Filterkammer umfasst, die das zweite Kraftstoffdampffilter einschließt, wobei eine erste Schaltstellung des Ventils bewirkt, dass ein Weg zwischen dem ersten und dem dritten Anschluss über das zweite Kraftstoffdampffilter freigeschaltet ist, und wobei eine zweite Schaltstellung des Ventils bewirkt, dass ein Weg zwischen dem ersten und dem zweiten Anschluss unter Überbrückung des zweiten Kraftstoffdampffilters freigeschaltet ist.

Der Erfindung liegt die Aufgabe zugrunde, einen Kraftstoffbehälter für ein Kfz mit einem Entlüftungssystem bereitzustellen, welches einen kompakten Aufbau hat und eine modulare Anordnung der Zusatzaggregate des Kraftstoffbehälters ermöglicht.

Die der Erfindung zugrundeliegende Aufgabe wird gelöst durch die Merkmale des Anspruchs 1.

Ein Kraftstoffbehälter mit einem solchen Entlüftungsventil als Kompaktventil, mit dem mehrere Schaltfunktionen für den Betankungsfall, Betriebsentlüftungsfall und für den Fall der Dichtigkeitsüberprüfung des Kraftstoffbehälters realisierbar sind, ist eine hinsichtlich der vorstehend geschilderten Probleme besonders günstige Lösung. Darüber hinaus hat ein solches Entlüftungsventil den Vorzug, dass wenn die bei der Betankung anfallenden kohlenwasserstoffbeladenen Gase über ein Kraftstoffdampffilter geführt werden müssen, schaltungstechnisch zwischen der Betankung und der Betriebsentlüftung unterschieden werden kann. In diesem Fall wäre das Entlüftungsventil gemäß der Erfindung mit seinem ersten Anschluss an den Abgang eines zwischengeschalteten ersten Kraftstoffdampffilters anzuschließen, so dass das in dem Ventilgehäuse des Entlüftungsventils vorgesehene zweite Kraftstoffdampffilter im Betankungsfall überbrückt wird.

Grundsätzlich ist es wünschenswert, das Kraftstoffdampffilter so auszulegen, dass möglichst keine Kohlenwasserstoffe in die Atmosphäre gelangen. Trotz guter Wirkungsweise der bekannten Kraftstoffdampffilter gelingt es jedoch nicht, dies vollständig zu vermeiden. Die durch das Kraftstoffdampffilter an die Atmosphäre gelangenden Verunreinigungen werden im Fachjargon auch als sogenannte "bleed emissions" bezeichnet.

Der Effizienz des Kraftstoffdampffilters sind unter anderem deshalb gewisse Grenzen gesetzt, weil beim Betankungsvorgang je nach Füllgeschwindigkeit bis zu 60 l/min Gas aus dem Kraftstoffbehälter verdrängt werden müssten. Dieser Volumenstrom wird über das Kraftstoffdampffilter geführt. Je höher der Wirkungsgrad des Filters, desto höher ist auch dessen Durchströmungswiderstand, so dass das Kraftstofffilter eine gewisse Mindestdurchlässigkeit aufweist, um ein vorzeitiges Abschalten der Zapfpistole beim Betankungsvorgang zu verhindern. In dem Zustand Betriebsentlüftung steigt die Gefahr, dass die sogenannten "bleed emissions" durch das Filter an die Atmosphäre gelangen, was vermieden werden soll.

Durch die erfindungsgemäße Ausbildung des Entlüftungsventils ist nun vorgesehen, in diesem ein zusätzliches zweites Kraftstoffdampffilter anzuordnen, das eine Reduzierung von "bleed emissions" bei Betrieb des Kfz bewirkt. Im Betankungsfall wird dieses zweite Kraftstoffdampffilter überbrückt, so dass der zusätzliche Filterwiderstand des in dem Entlüftungsventil vorgesehenen Kraftstoffdampffilters kein Hindernis für den Betankungsvorgang darstellt.

Es ist daher zweckmäßig, wenn das Kraftstoffdampffilter in der ersten Filterkammer als dem Kraftstoffdampffilter des Kraftstoffbehälters nachgeschaltete zweite Feinreinigungsstufe ausgebildet ist.

Der Kraftstoffbehälter gemäß der Erfindung hat darüber hinaus den Vorzug, dass mit einer einzigen Baueinheit (Ventil) die Betriebszustände Betankung, Betriebsentlüftung sowie Dichtigkeitsprüfung schaltbar sind, und zwar mittels nur zwei Schaltvorgängen. In diesem Sinne kann das Ventil als Drei/Zwei-WegeVentil bezeichnet werden. Der Anschluss des erfindungsgemäßen Entlüftungsventils an den Kraftstoffbehälter ist dabei geschickterweise so gewählt, dass eine Schaltstellung des Entlüftungsventils sowohl für den Betankungsfall als auch für den Diagnosefall zu wählen ist. Im Diagnosefall sind der erste und der dritte Anschluss des Entlüftungsventils miteinander verbunden; der erste Anschluss ist an den Kraftstoffbehälter bzw. an das Kraftstoffdampffilter des Kraftstoffbehälters angeschlossen, der dritte Anschluss kommuniziert mit dem Einfüllrohr des Kraftstoffbehälters. Wenn der Deckel des Kraftstoffbehälters auf das Einfüllrohr aufgesetzt ist und dieser verschlossen ist, ist damit das System hermetisch abgeschlossen und kann entweder durch Beaufschlagung mit Unterdruck oder mit Überdruck auf Dichtigkeit überprüft werden. Die Dichtigkeitsprüfung bezieht das Einfüllrohr des Kraftstoffbehälters mit ein, so dass die Bordelektronik erkennt, wenn der Tankdeckel aufgesetzt und verschlossen ist.

Bei einer bevorzugten Variante des Kraftstoffbehälters gemäß der Erfindung ist das schaltbare Element als ein elektromagnetisch betätigbarer Ventilstößel ausgebildet, der mit wenigstens zwei Ventilkörpern versehen ist, welche jeweils mit wenigstens einem zugeordneten Ventilsitz zusammenwirken.

Bei einer Variante des Kraftstoffbehälters gemäß der Erfindung sind jedem Ventilkörper zwei wechselweise zusammenwirkende Ventilsitze zugeordnet. Hierdurch wird gewährleistet, dass die von dem Ventilstößel durchsetzten Strömungswege gegeneinander abgedichtet sind. Alternativ kann die Abdichtung durch eine flexible Dichtmanschette oder dergleichen erfolgen.

Vorzugsweise nimmt das Entlüftungsventil des Kraftstoffbehälters gemäß der Erfindung ohne Betätigung die erste Schaltstellung ein, bei der ein Weg zwischen dem ersten und dritten Anschluss freigeschaltet ist (Betriebsentlüftung).

Bei einer anderen bevorzugten Variante des Kraftstoffbehälters werden ein zweiter Ventilsitz und ein zweiter Ventilkörper, die dem zweiten Anschluss zugeordnet sind, federbelastet in der geschlossenen Stellung gehalten, wobei in der geschlossenen Stellung des zweiten Ventilkörpers ein erster dem dritten Anschluss zugeordneter Ventilkörper sich in der geöffneten Stellung befindet.

Besonders vorteilhaft ist es, wenn der zweite Ventilkörper und der zugehörige zweite Ventilsitz so zusammenwirken, dass die Strömung des das Ventil durchströmenden Mediums bei Rückschwall in Richtung der Schließkraft des Entlüftungsventils wirkt. Da das zweite Ventil dem Anschluss an das Einfüllrohr des Kfz zugeordnet ist, wirkt dieses dann als "rollover Ventil", das das Einfüllrohr im Überschlagfall versperrt. Dies ist insoweit vorteilhaft, als dass ein zusätzliches Rückschlagventil bzw. ein zusätzliches "rollover Ventil" entbehrlich ist.

Zweckmäßigerweise ist der zweite Ventilkörper auf der Anschlussseite des zugehörigen zweiten Ventilsitzes angeordnet.

Bei einer bevorzugten Variante des Kraftstoffbehälters gemäß der Erfindung ist vorgesehen, dass der Ventilstößel als Anker eines elektromagnetischen Schaltwerks mit Spule ausgebildet ist, wobei der Anker bei Strombeaufschlagung des Schaltwerks von der ihn umgebenden Spule abgestoßen bzw. ausgestoßen wird.

Dabei kann der Ventilstößel so angeordnet sein, dass dieser zwei getrennte Strömungswege innerhalb des Ventilkörpers durchsetzt, wobei eine Durchführung durch einen Strömungsweg mittels einer flexiblen Manschette abgedichtet ist.

Die Erfindung wird nachstehend anhand zweier in den Zeichnungen dargestellter Ausführungsbeispiele erläutert werden.

Es zeigen:
- Fig. 1: eine schematische Darstellung eines Kraftstoffbehälters mit einem Entlüftungssystem,
- Fig. 2: eine strukturell vereinfachte systematische Darstellung eines Kraftstoffbehälters mit Entlüftungssystem, in welchem das Entlüftungsventil gemäß der Erfindung symbolisch und funktional dargestellt ist,
- Fig. 3: eine stark vereinfachte schematische Schnittansicht eines Entlüftungsventils nach einem ersten Ausführungsbeispiel der Erfindung in der zweiten Schaltstellung (Betankungsentlüftung oder Diagnosefall),
- Fig. 4: das in Figur 3 dargestellte Entlüftungsventil in der ersten Schaltstellung (Betriebsentlüftung),
- Fig. 5: eine Ansicht des Entlüftungsventils nach einem zweiten Ausführungsbeispiel der Erfindung in der zweiten Schaltstellung (Betankungsentlüftung oder Dichtigkeitsprüfung) und
- Fig. 6: eine Ansicht des in Figur 5 dargestellten Ventils in der ersten Schaltstellung (Betriebsentlüftung).

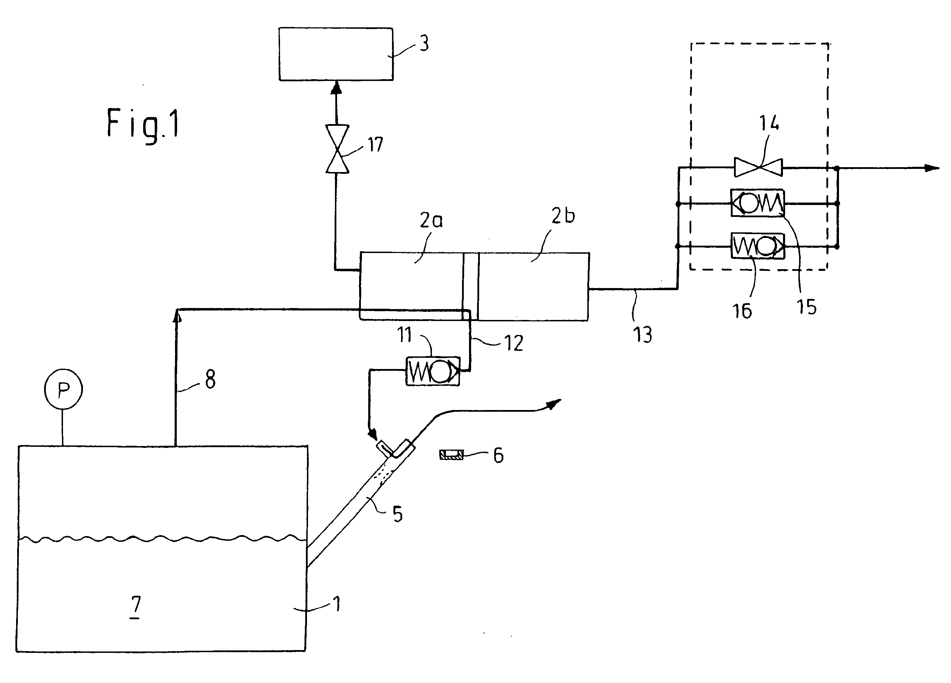

In Figur 1 ist der Kraftstoffbehälter 1 schematisch im Zusammenwirken mit einem ersten und zweiten Kraftstoffdampffilter 2 a, 2 b und einer Brennkraftmaschine 3 eines Kfz dargestellt. Die Ansicht verdeutlicht lediglich die funktionalen Zusammenhänge der Einzelteile eines Entlüftungssystems sowie die Schaltfunktionen, die mit dem erfindungsgemäßen Entlüftungsventil 4 zu realisieren sind.

Der mit 1 bezeichnete Kraftstoffbehälter wird üblicherweise über ein Einfüllrohr 5 mit einem Deckelverschluss 6 betankt. Der eingefüllte Kraftstoff 7 verdrängt bei der Betankung das oberhalb desselben befindliche Luft/Kraftstoffdampfgemisch, welches über eine Entlüftungsleitung 8 einem ersten Kraftstoffdampffilter 2 a zugeführt wird. Dem ersten Kraftstoffdampffilter 2 a ist ein zweites Kraftstoffdampffilter 2 b nachgeschaltet. Zwischen dem ersten Kraftstoffdampffilter 2 a und dem Einfüllrohr 5 erstreckt sich eine über ein Rückschlagventil 11 geführte Betankungsentlüftungsleitung. Die Betankungsentlüftungsleitung 12 mündet in das Einfüllrohr 5 so, dass die bei der Betankung aus dem Behältervolumen verdrängten Gase über das erste Kraftstoffdampffilter 2 a und das Einfüllrohr 5 an die Atmosphäre abgeführt werden. Dabei erfolgt eine Ausfilterung der Kohlenwasserstoffe in dem ersten Kraftstoffdampffilter 2 a.

Bei Betrieb des Kfz werden die im Kraftstoffbehälter 1 anfallenden kohlenwasserstoffbeladenen Gase über das erste und zweite Kraftstoffdampffilter 2 a, 2 b und die Betriebsentlüftungsleitung 13 an die Atmosphäre abgeführt. Das zweite Kraftstoffdampffilter 2 b dient dabei als Feinreinigungsstufe des ersten Kraftstoffdampffilters 2 a zur Verhinderung sogenannter "bleed emissions".

Das an die Betriebsentlüftungsleitung 13 angeschlossene Diagnoseventil 14 ist während des Betriebs und während der Betankung des Kfz geschlossen. Zu dem Diagnoseventil 14 sind ein Druckhalteventil 15 und ein weiteres Rückschlagventil 16 parallel geschaltet. Über das Druckhalteventil 15 wird in dem Kraftstoffbehälter 1 ein leichter Überdruck gehalten. Die Betriebsentlüftung über die Betriebsentlüftungsleitung 13 erfolgt gegen den von dem Druckhalteventil 15 erzeugten Überdruck. In diesem Fall ist der Deckelverschluss 6 auf das Einfüllrohr 5 aufgesetzt, so dass alle im Kraftstoffbehälter 1 anfallenden Gase aufgrund von Temperaturschwankungen und Schwallbewegungen des Kraftstoffs über die Kraftstoffdampffilter 2 a und 2 b an die Atmosphäre geführt werden. Im Fall der Dichtigkeitsprüfung wird das Diagnoseventil 14 kurzzeitig geöffnet, um den Druckausgleich zwischen Kraftstoffbehälter 1 und Atmosphäre herzustellen. Sodann wird das Diagnoseventil 14 wieder geschlossen, der Kraftstoffbehälter 1 wird zwecks Dichtigkeitsprüfung unter berdruck gesetzt, wobei dieser Überdruck unterhalb des Öffnungsdrucks für das Druckhalteventil 15 liegt. Über das Rückschlagventil 16 ist eine Rückspülung der Kraftstoffdampffilter 2 a, 2 b gegen einen leichten Gegendruck möglich, in diesem Fall wird das Rückspülventil 17 geöffnet und die Brennkraftmaschine 3 zieht die Verbrennungsluft aus der Atmosphäre über die Kraftstoffdampffilter 2 a, 2 b.

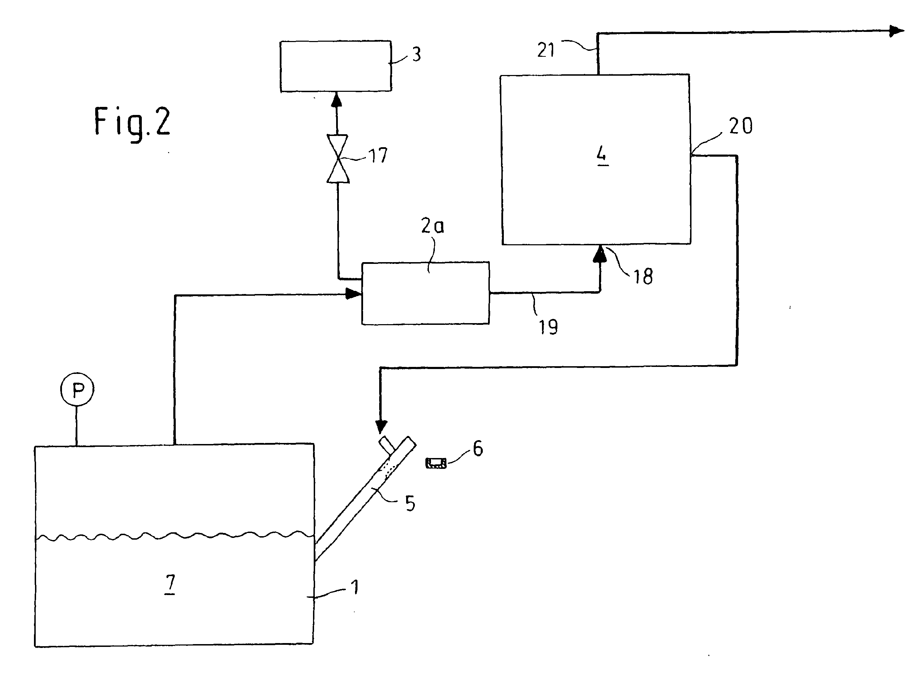

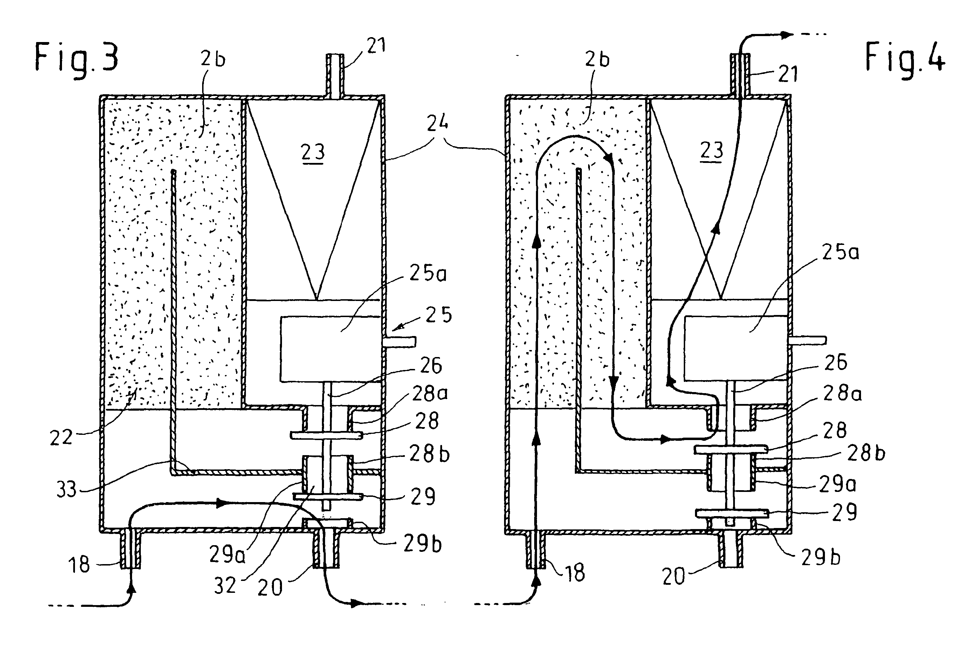

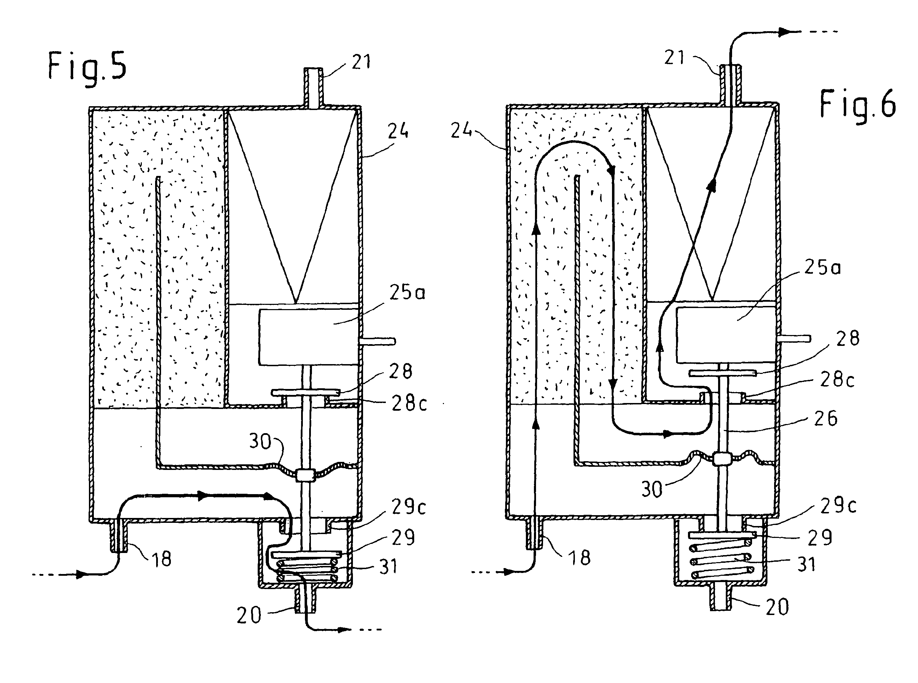

In Figur 2 ist das in Figur 1 dargestellte Entlüftungsschema unter Einbeziehung des Entlüftungsventils 4 gemäß der Erfindung dargestellt. Das Entlüftungsventil 4 gemäß der Erfindung vereinigt die Funktionalität der Ventile 11 und 14 sowie des zweiten Kraftstoffdampffilters 2 b. Die genaue Ausgestaltung des Entlüftungsventils 4 ist beispielsweise aus den Figuren 3 und 4 oder aus den Figuren 5 und 6 ersichtlich, wobei die Figuren 3 und 4 ein erstes Ausführungsbeispiel des Entlüftungsventils 4 zeigen, die Figuren 5 und 6 hingegen ein zweites Ausführungsbeispiel des Entlüftungsventils 4 zeigen.

Das Entlüftungsventil 4 ist mit einem ersten Anschluss 18 über die Entlüftungsleitung 19 an das erste Kraftstoffdampffilter 2 a des Kraftstoffbehälters 1 angeschlossen. Ein zweites Kraftstoffdampffilter 2 b ist, wie nachstehend noch beschrieben, in das Entlüftungsventil 4 integriert. Ein zweiter Anschluss 20 des Entlüftungsventils ist mit dem Einfüllrohr 5 des Kraftstoffbehälters 1 verbunden. Ein dritter Anschluss 21 des Entlüftungsventils 4 kommuniziert mit der Atmosphäre.

Wie insbesondere aus den Figuren 3 und 4 ersichtlich ist, sind in dem Entlüftungsventil 4 zwei Schaltwege vorgesehen, die andeutungsweise mittels Pfeilen dargestellt sind. Das Entlüftungsventil umfasst eine erste Filterkammer 22, die ein zweites Kraftstoffdampffilter 2 b als zweite Filterstufe zur Filterung der "bleed emissions" des Kraftstoffbehälters 1 beinhaltet, sowie eine zweite Filterkammer 23, welche ein nicht näher bezeichnetes Rückspülfilter enthält. Das Rückspülfilter dient dazu, bei der Reinigung der Kraftstoffdampffilter das Ansaugen von Schmutzpartikeln aus der Atmosphäre zu verhindern.

In dem Ventilgehäuse 24 des Entlüftungsventils 4 ist weiterhin ein Magnetantrieb 25 vorgesehen, der eine Spule 25 a sowie einen Ventilstößel 26 als Anker umfasst. An dem Ventilstößel 26 sind ein erster und ein zweiter tellerförmiger Ventilkörper 28 und 29 vorgesehen, die jeweils mit zwei diametral gegenüberliegend angeordneten Ventilsitzen 28 a, b und 29 a, b zusammenwirken. Das Ventilgehäuse 24 umfasst zwei Strömungswege, deren Verlauf durch die in den Figuren 3 und 4 eingezeichneten Pfeile sichtbar ist.

In Figur 3 ist das Magnetventil so geschaltet, dass der erste Anschluss 18 und der zweite Anschluss 20 miteinander kommunizieren. Bei dieser Schaltung ist das in der ersten Filterkammer 22 enthaltene zweite Kraftstoffdampffilter 2 b überbrückt. Die Spule 25 a ist strombeaufschlagt, der Ventilstößel 26 wird angezogen, so dass der erste Ventilkörper 28 gegen den Ventilsitz 28 a gezogen ist und der zweite Ventilkörper 29 gegen den Ventilsitz 29 a anliegt. Dieser Schaltzustand entspricht dem Betankungsfall oder der Dichtigkeitsprüfung (OBD-Prüfung) des Kraftstoffbehälters. Bei Dichtigkeitsprüfung des Kraftstoffbehälters ist der Deckelverschluss 6 auf dem Einfüllrohr 5 aufgesetzt, so dass der Kraftstoffbehälter 1 zur Atmosphäre hermetisch abgeriegelt ist.

Bei der in Figur 4 gezeigten Schaltstellung ist der Ventilstößel 26 aus der Spule 25 a ausgefahren, dies entspricht dem stromlosen Zustand bei Betrieb des Kfz (Betriebsentlüftung). Der erste Ventilkörper 28 liegt gegen den Ventilsitz 28 b an, der zweite Ventilkörper 29 liegt gegen den Ventilsitz 29 b an, so dass der zweite Anschluss 20, der mit dem Einfüllrohr 5 verbunden ist, verschlossen ist. Freigeschaltet hingegen ist der Strömungsweg durch die erste Filterkammer 22 und die zweite Filterkammer 23 zu dem dritten Anschluss 21, der mit der Atmosphäre kommuniziert. Die bereits durch das erste Kraftstoffdampffilter 2 a gereinigten Gase aus dem Kraftstoffbehälter 1 werden auf diese Art und Weise nochmals über die Feinreinigungsstufe des zweiten Kraftstoffdampffilters 2 b in der ersten Filterkammer 22 des Entlüftungsventils geführt. Auf diese Art und Weise werden sogenannte "bleed emissions" effektiv verhindert.

Wie aus der Zusammenschau der Fig. 3 und 4 ebenfalls ersichtlich ist, ist bei jeder der in den Fig. 3 und 4 gezeigten Schaltstellungen des Ventilstößels 26 die Verbindung zwischen den zwei möglichen Strömungswegen in Form einer Durchführung 32 durch die Trennwand 33 geschlossen, und zwar im Falle der Fig. 3 durch den gegen den Ventilsitz 29a anliegenden zweiten Ventilkörper 29 und im Falle der Fig. 4 durch den gegen den Ventilsitz 28b anliegenden ersten Ventilkörper 28. Alternativ kann die Durchführung 32 durch die Trennwand 33 mittels einer Dichtmanschette 30 vorgenommen werden, wie dies anhand des in den Fig. 5 und 6 dargestellten Ausführungsbeispiels erläutert wird.

In den Figuren 5 und 6 ist ein weiteres Ausführungsbeispiel des Entlüftungsventils 4 gemäß der Erfindung gezeigt. Bei diesem Entlüftungsventil 4 ist auch der sogenannte "rollover" Fall (Überschlag des Kfz) berücksichtigt. Den Ventilkörpern 28 und 29 ist jeweils nur ein Ventilsitz 28 c und 29 c zugeordnet. Der Ventilstößel 26 wird bei strombeaufschlagter Spule 25 a von dieser ausgestoßen bzw. ausgehoben, außerdem durchsetzt der Ventilstößel 26 beide Strömungswege, wobei zur Abdichtung der Strömungswege im Bereich des Durchtritts des Ventilstößels 26 eine Dichtmanschette 30 aus einem elastischen Material vorgesehen ist.

Figur 5 zeigt wiederum den Betankungs- oder OBD-Fall, bei dem der erste Anschluss 18 und der zweite Anschluss 20 miteinander kommunizieren. Der zweite Ventilkörper 29 wird gegen den Druck einer Feder 31 in der geöffneten Stellung gehalten. In diesem Fall ist sowohl für den Betankungsfall als auch für den OBD-Fall die Spule 25 a strombeaufschlagt. Der erste Ventilkörper 28 wird gegen den zugehörigen Ventilsitz 28 c gedrückt.

Figur 6 zeigt den Fall der Betriebsentlüftung, bei welchem die Spule 25 a stromlos ist. Der zweite Ventilkörper 29 wird von der Feder 31 gegen den Ventilsitz 29 c gedrückt (geschlossen), der erste Ventilkörper 28 hingegen befindet sich in der geöffneten Stellung, so dass der erste Anschluss 18 und der dritte Anschluss 21 über das in der ersten Filterkammer 22 enthaltene zweite Kraftstoffdampffilter 2 a miteinander kommunizieren können. Diese Anordnung hat den Vorzug, dass der zweite Ventilkörper 29 sowie der zweite Ventilsitz 29 c auf der dem Einfüllrohr zugewandten Seite des zweiten Anschlusses 20 angeordnet sind, so dass im Überschlagfall der hydrostatische Druck der Flüssigkeitssäule des aus dem Einfüllrohr 5 anstehenden Kraftstoffs in Schließrichtung des Ventils wirkt, das heißt den Ventilkörper 29 gegen den Ventilsitz 29 c drückt.

### Bezugszeichenliste

- 1: Kraftstoffbehälter
- 2 a: erstes Kraftstoffdampffilter
- 2 b: zweites Kraftstoffdampffilter
- 3: Brennkraftmaschine
- 4: Entlüftungsventil
- 5: Einfüllrohr
- 6: Deckelverschluss
- 7: Kraftstoff
- 8: Entlüftungsleitung
- 11: Rückschlagventil
- 12: Betankungsentlüftungsleitung
- 13: Betriebsentlüftungsleitung
- 14: Diagnoseventil
- 15: Druckhalteventil
- 16: Rückschlagventil
- 17: Rückspülventil
- 18: erster Anschluss
- 19: Entlüftungsleitung
- 20: zweiter Anschluss
- 21: dritter Anschluss
- 22: erste Filterkammer
- 23: zweite Filterkammer
- 24: Ventilgehäuse
- 25: Magnetantrieb
- 25 a: Spule
- 26: Ventilstößel
- 28: erster Ventilkörper
- 28 a, b, c: Ventilsitze
- 29: zweiter Ventilkörper
- 29 a, b, c: Ventilsitze
- 30: Dichtmanschette
- 31: Feder
- 32: Durchführung
- 33: Trennwand

## Patentansprüche

1. Kraftstoffbehälter für Kfz mit einem Entlüftungssystem umfassend ein erstes und zweites Kraftstoffdampffilter (2a, 2b) und ein Entlüftungsventil (4), mit einem Ventilgehäuse (24) mit wenigstens einem schaltbaren Element zur Realisierung wenigstens zweier Schaltstellungen und mit wenigstens drei Anschlüssen (18, 20, 21), wobei ein erster Anschluss (18) an das dem Kraftstoffbehälter nachgeschaltete erste Kraftstoffdampffilter (2a), ein zweiter Anschluss (20) an das Einfüllrohr (5) des Kraftstoffbehälters (1) und ein dritter Anschluss (21) an die Atmosphäre vorgesehen sind, wobei das Ventilgehäuse (24) mindestens eine erste Filterkammer (22) umfasst, die das zweite Kraftstoffdampffilter (2b) einschließt, wobei eine erste Schaltstellung des Ventils die Betriebsentlüftungs des Kraftstoffbehälters (1) bewirkt, bei der ein Weg zwischen dem ersten (18) und dem dritten (21) Anschluss über das zweite Kraftstoffdampffilter (2b) freigeschaltet ist, und wobei eine zweite Schaltstellung des Ventils die Betankungsentluftung des Kraftstoffbehälters (1) bewirkt, bei der ein Weg zwischen dem ersten und dem zweiten Anschluss (18, 20) unter Überbrückung des zweiten Kraftstoffdampffilters (2b) freigeschaltet ist.

2. Kraftstoffbehälter nach Anspruch 1, **dadurch gekennzeichnet, dass** das zweite Kraftstoffdampffilter (2b) in der ersten Filterkammer (22) als dem ersten Kraftstoffdampffilter (2a) des Kraftstoffbehälters (1) nachgeschaltete zweite Reinigungsstufe ausgebildet ist.

3. Kraftstoffbehälter nach einem der Ansprüche 1 oder 2, **dadurch gekennzeichnet, dass** als schaltbares Element ein elektromagnetisch betätigbarer Ventilstößel (26) vorgesehen ist, der mit wenigstens zwei Ventilkörpern (28, 29) versehen ist, welche jeweils mit wenigstens einem zugehörigen Ventilsitz (28a,b,c; 29a,b,c ) zusammenwirken.

4. Kraftstoffbehälter nach Anspruch 3, **dadurch gekennzeichnet, dass** jedem Ventilkörper (28, 29) zwei wechselweise mit diesen zusammenwirkende Ventilsitze (28a, 28b, 29a, 29b) zugeordnet sind.

5. Kraftstoffbehälter nach Anspruch 3, **dadurch gekennzeichnet, dass** ein Ventilsitz (29c) und ein zweiter Ventilkörper (29), die dem zweiten Anschluss (20) zugeordnet sind, federbelastet in der geschlossenen Stellung gehalten werden.

6. Kraftstoffbehälter nach Anspruch 5, **dadurch gekennzeichnet, dass** in der geschlossenen Stellung des zweiten Ventilkörpers (29) ein erster, dem dritten Anschluss (21) zugeordneter Ventilkörper (28) sich in der geöffneten Stellung befindet.

7. Kraftstoffbehälter nach einem der Ansprüche 3, 5 oder 6, **dadurch gekennzeichnet, dass** der zweite Ventilkörper (29) und ein zugehöriger zweiter Ventilsitz (29c) so zusammenwirken, dass bei Rückschwall die Strömung des das Ventil durchströmenden Mediums in Richtung der Schließkraft des Ventils wirkt.

8. Kraftstoffbehälter nach einem der Ansprüche 3 oder 5 bis 7, **dadurch gekennzeichnet, dass** der Ventilstößel (26) als Anker eines elektromagnetischen Schaltwerks mit Spule (25a) ausgebildet ist, wobei der Anker bei Strombeaufschlagung des Schaltwerks von der ihm umgebenden Spule (25a) abgestoßen wird.

9. Kraftstoffbehälter nach einem der Ansprüche 3 oder 5, **dadurch gekennzeichnet, dass** der Ventilstößel (26) zwei getrennte Strömungswege innerhalb des Ventilkörpers (24) durchsetzt, wobei eine Durchführung durch einen Strömungsweg mittels einer flexiblen Dichtmanschette (30) abgedichtet ist.

## Claims

1. Fuel tank for motor vehicles, said fuel tank having a venting system comprising a first and a second fuel vapour filter (2a, 2b) and a venting valve (4), having a valve housing (24) having at least one switchable element for producing at least two switching positions, and having at least three connections (18, 20, 21); wherein there are provided a first connection (18) to the first fuel vapour filter (2a), which filter is connected downstream of the fuel tank, a second connection (20) to the filler pipe (5) of the fuel tank (1), and a third connection (21) to the atmosphere; wherein the valve housing (24) comprises at least one first filter chamber (22) which encloses the second fuel vapour filter (2b); wherein a first switching position of the valve brings about the operational venting of the fuel tank (1), during which a path between the first (18) and the third (21) connection via the second fuel vapour filter (2b) is cleared; and wherein a second switching position of the valve brings about the refuelling venting of the fuel tank (1), during which a path between the first and the second connection (18, 20) is cleared, bypassing the second fuel vapour filter (2b).

2. Fuel tank according to claim 1, **characterised in that** the second fuel vapour filter (2b) is constructed in the first filter chamber (22) as a second cleaning stage which is connected downstream of the first fuel vapour filter (2a) of said fuel tank (1).

3. Fuel tank according to either of claims 1 or 2, **characterised in that** there is provided, as the switchable element, an electromagnetically actuatable valve tappet (26) which is provided with at least two valve bodies (28, 29) which interact, in each case, with at least one appertaining valve seat (28a, b, c; 29a, b, c).

4. Fuel tank according to claim 3, **characterised in that** there are associated with each valve body (28, 29) two valve seats (28a, 28b, 29a, 29b) which interact with the said valve bodies alternately.

5. Fuel tank according to claim 3, **characterised in that** a valve seat (29c) and a second valve body (29), which are associated with the second connection (20), are held in the closed position in a spring-loaded manner.

6. Fuel tank according to claim 5, **characterised in that**, when the second valve body (29) is in the closed position, a first valve body (28), which is associated with the third connection (21), is in the open position.

7. Fuel tank according to one of claims 3, 5 or 6, **characterised in that** the second valve body (29) and an appertaining second valve seat (29c) interact in such a way that, in the event of a back-surge occurring, the flow of the medium flowing through the valve acts in the direction of the closing force of the valve.

8. Fuel tank according to one of claims 3 or 5 to 7, **characterised in that** the valve tappet (26) is constructed as the armature of an electromagnetic switching mechanism having a coil (25a), said armature being repelled, when the switching mechanism is acted upon by current, by the coil (25a) which surrounds it.

9. Fuel tank according to one of claims 3 or 5, **characterised in that** the valve tappet (26) passes through two separate flow paths inside the valve body (24), a lead-in through one flow path being sealed by means of a flexible sealing collar (30).

## Revendications

1. Réservoir de carburant pour un véhicule automobile avec un dispositif d'aération, comprenant un premier et un deuxième filtres à vapeur de carburant (2a, 2b) et une soupape de purge (4), avec un carter (24) de soupape avec au moins un élément commutable destiné à réaliser au moins deux positions de commutation et avec au moins trois raccordements (18, 20, 21), un premier raccordement (18) étant prévu au niveau du premier filtre à vapeur de carburant (2a) placé en aval du réservoir de carburant, un deuxième raccordement (20) étant prévu au niveau du tuyau de remplissage (5) du réservoir de carburant (1) et un troisième raccordement (21) étant prévu mis à l'atmosphère, sachant que le carter (24) de soupape comprend au moins une première chambre (22) de filtre qui enferme le deuxième filtre à vapeur de carburant (2b), sachant qu'une première position de commutation de la soupape entraîne l'aération de fonctionnement du réservoir de carburant (1) dans laquelle un trajet est défini entre le premier raccordement (18) et le troisième raccordement (21) par le biais du deuxième filtre à vapeur de carburant (2b), et sachant qu'une deuxième position de commutation de la soupape entraîne l'aération de remplissage du réservoir de carburant (1) dans laquelle un trajet est défini entre le premier raccordement (18) et le deuxième raccordement (20) en court-circuitant le deuxième filtre à vapeur de carburant (2b).

2. Réservoir de carburant selon la revendication 1, **caractérisé en ce que** le deuxième filtre à vapeur de carburant (2b) est réalisé dans la première chambre (22) de filtre en tant que deuxième étape d'épuration placée en aval du premier filtre à vapeur de carburant (2a) du réservoir de carburant (1).

3. Réservoir de carburant selon l'une quelconque des revendications 1 ou 2, **caractérisé en ce qu'**il est prévu en tant qu'élément commutable un poussoir (26) de soupape actionnable électromagnétiquement et muni d'au moins deux corps (28, 29) de soupape concourant chacun avec au moins un siège (28a, b, c, 29a, b, c) de soupape associé.

4. Réservoir de carburant selon la revendication 3, **caractérisé en ce qu'**à chacun des corps (28, 29) de soupape sont associés deux sièges (28a, 28b, 29a, 29b) de soupape concourant alternativement avec ceux-ci.

5. Réservoir de carburant selon la revendication 3, **caractérisé en ce qu'**un siège (29c) de soupape et un deuxième corps (29) de soupape, associés au deuxième raccordement (20), sont maintenus, sous l'action d'un ressort, en position fermée.

6. Réservoir de carburant selon la revendication 5, **caractérisé en ce que**, le deuxième corps (29) de soupape étant en position fermée, un premier corps (28) de soupape affecté au troisième raccordement (21) est en position ouverte.

7. Réservoir de carburant selon l'une quelconque des revendications 3, 5 ou 6, **caractérisé en ce que** le deuxième corps (29) de soupape et un deuxième siège (29c) de soupape associé concourent de sorte qu'en cas de retour de jet, le fluide traversant la soupape s'écoule en direction de la force de fermeture de la soupape.

8. Réservoir de carburant selon l'une quelconque des revendications 3 ou 5 à 7, **caractérisé en ce que** le poussoir (26) de soupape est réalisé en tant que noyau d'un dispositif de commutation électromagnétique à bobine (25a), sachant que le noyau est repoussé par la bobine (25a) l'entourant lorsque le dispositif de commutation reçoit du courant.

9. Réservoir de carburant selon l'une quelconque des revendications 3 ou 5, **caractérisé en ce que** le poussoir (26) de soupape traverse, à l'intérieur du carter (24) de soupape, deux chemins d'écoulement séparés, sachant que tout passage à travers un chemin d'écoulement est étanché à l'aide d'un manchon d'étanchéité (30) flexible.
